Europäisches Patentamt

European Patent Office

Office européen des brevets

(11) Veröffentlichungsnummer: **0 280 935**
**A2**

(12) # EUROPÄISCHE PATENTANMELDUNG

(21) Anmeldenummer: 88101903.8

(51) Int. Cl.⁴: **B01D 11/02** , A23L 1/221

(22) Anmeldetag: 10.02.88

(30) Priorität: 28.02.87 DE 3706594

(43) Veröffentlichungstag der Anmeldung:
07.09.88 Patentblatt 88/36

(84) Benannte Vertragsstaaten:
AT BE CH FR GB IT LI NL SE

(71) Anmelder: MESSER GRIESHEIM GMBH
Hanauer Landstrasse 330
D-6000 Frankfurt/Main 1(DE)

(72) Erfinder: Beutler, Hans Josef
Küferstrasse 24
D-4156 Willich(DE)
Erfinder: Gährs, Hans Jasper, Dr.
Novalisstrasse 12
D-4000 Düsseldorf(DE)
Erfinder: Lenhard, Ulrich
Trift 42
D-4150 Krefeld(DE)
Erfinder: Lürken, Franz
Wilhelm-Stefen-Strasse 79
D-4150 Krefeld(DE)

(54) Verfahren zur Extraktion organischer Bestandteile aus Feststoffen.

(57) Bei Verfahren der Hochdruckextraktion wird ein gasförmiges Lösungsmittel unter hohem Druck in vertikaler Richtung durch einen mit Feststoff gefüllten Extraktor(4) geleitet und nimmt hierbei organische Bestandteile aus den Feststoffen auf. Diese werden anschließend in einem Abscheider(7) abgetrennt.Um die Wirtschaftlichkeit der Extraktion zu verbessern, läßt man das Lösungsmittel zumindest teilweise von oben nach unten durch den Extraktor strömen.

FIG.1

EP 0 280 935 A2

## Verfahren zur Extraktion organischer Bestandteile aus Feststoffen

Die Erfindung betrifft ein Verfahren zur Extraktion organischer Bestandteile aus Feststoffen nach dem Oberbegriff des Anspruches 1.

Das Verfahren der Hochdruckextraktion ist aus zahlreichen Veröffentlichungen bekannt, beispielsweise aus der DE-AS 1 493 190. Bei diesem Verfahren werden komprimierte Gase oder Gasgemische als Lösungsmittel eingesetzt um Bestandteile aus Stoffgemischen zu lösen und abzutrennen. Bevorzugt als Lösungsmittel wird im allgemeinen überkritisches Kohlendioxid. Das Verfahren der Hochdruckextraktion wird vor allem zum Extrahieren organischer Bestandteile aus Feststoffen eingesetzt. Ein Beispiel hierfür ist die DE-OS 2 127 596. Andere technisch realisierte Anwendungen sind die Herstellung von Hopfenextrakten und die Produktion coffeinfreien Kaffees. Ziel dieser Verfahren ist es also immer, entweder die Extrakte zu gewinnen oder die Rohstoffe zu veredeln.

Hochdruckextraktionsanlagen bestehen im einfachsten Fall aus einem Extraktor und einem Abscheider, durch welche das gasförmige Lösungsmittel im Kreis geführt wird. Im Extraktor durchströmt das Gas im komprimierten, meist überkritischen, Zustand den Feststoff und belädt sich dabei mit bestimmten organischen Inhaltsstoffen. Diese gelösten Stoffe verlassen den Extraktor mit dem Lösungsmittelstrom und werden im Abscheider abgetrennt. Die Abscheidung wird mit unterschiedlichen Maßnahmen bewerkstelligt. Sie kann durch Änderungen des Drucks oder der Temperatur bewirkt werden, es können Adsorber oder Waschlösungen verwendet werden und schließlich können andere Gase zudosiert werden, welche das Lösungsvermögen des Lösungsmittel reduzieren. Auch Kombinationen dieser Maßnahmen sind möglich.

Darüber hinaus sind zahlreiche Verfahrensvarianten bekanntgeworden, mit denen das Grundverfahren bestimmten Aufgabenstellungen angepaßt wird oder wirtschaftlich optimiert werden soll. Beispiele hierfür sind der Einsatz von Gasgemischen zur Erzielung höherer Selektivitäten, der Einsatz mehrerer auf verschiedenen Druckniveaus arbeitenden Abscheideautoklaven zur Herstellung fraktionierter Extrakte, sowie spezielle Ausführungsformen der Extraktoren. Ein Beispiel hierfür ist die DE-OS 3 339 181, welche einen Extraktor mit Rohstoff- und Adsorptionsmittelfüllung zeigt, so daß in einem Behälter die Extraktion und die Extraktabtrennung durchgeführt werden kann. Wesentliches Merkmal dieses bekannten Verfahrens ist, daß das Lösungsmittel durch einen zylindrischen Extraktor von außen nach innen durch den Feststoff strömt und sich die Strömungsgeschwindigkeit des Lösungsmittels daher fortwährend erhöht. Abgesehen von dieser Ausnahme wird bei allen bekannten Verfahren der Hochdruckextraktion von Feststoffen das Lösungsmittel am Boden in den Extraktor eingeführt und im Kopfbereich abgezogen. Das Lösungsmittel durchströmt also den im Extraktor als Schüttung angeordneten feststoffartigen Rohstoff von unten nach oben. Bei der Anwendung des Verfahrens der Hochdruckextraktion auf fließfähige Stoffe sind dagegen auch andere Kontaktmöglichkeiten bekannt. So zeigt die DE-AS 1 493 190 die gleichzeitige Zufuhr derartiger fließfähiger Stoffe und des Lösungsmittels in einen Mischer, in welchem die Extraktion stattfindet.

Hauptsächliche Gründe für diese wie selbstverständlich praktizierte Lösungsmittelführung durch die Feststoffschüttung dürften die Annahme sein, daß eine Auflockerung des Feststoffbettes und damit ein besserer Kontakt zwischen Rohstoff und Lösungsmittel erreicht wird. Ferner wird ein Zusammenbacken und eine Verdichtung des Rohstoffes vermieden.

Der Erfindung liegt die Aufgabe zugrunde, durch eine Optimierung der Lösungsmittelführung durch den Feststoff die Wirtschaftlichkeit des Verfahrens der Hochdruckextraktion zu verbessern.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Es wurde überraschenderweise festgestellt, daß sich durch die erfindungsgemäße Umkehrung der Strömungsrichtung im Extraktor entgegen der üblichen Praxis ganz erstaunliche Erhöhungen der Beladung erzielen lassen. Bei einer ganzen Reihe von feststoffartigen Rohstoffen wurden bis zu 100% höhere Beladungen des Lösungsmittels festgestellt, wenn das Lösungsmittel gemäß der Erfindung den Feststoff von oben nach unten im Extraktor durchströmt. Hierdurch wird die Wirtschaftlichkeit entscheidend verbessert, denn diese hängt von der Beladung des Lösungsmittels mit extrahierten organischen Bestandteilen nach Verlassen des Extraktors ab. Je höher diese Beladung mit den gewünschten Inhaltsstoffen ist, desto weniger häufig muß es nach der Extraktabtrennung und Wiederaufbereitung in den Extraktor zurückgeführt werden. Hierdurch werden erhebliche Mengen an Zeit und Energie eingespart.

Eine exakte Begründung für die überraschende Wirksamkeit des erfindungsgemäßen Verfahrens konnte noch nicht gefunden werden. Es wurden jedoch Zusammenhänge zwischen der Molekülgröße der zu lösenden organischen Bestandteile und der Wirksamkeit der erfindungsgemäßen Lösungsmittelführung erkannt. Für Substanzen mit höherem Molekulargewicht scheint der Effekt der Beladungserhöhung wesentlich größer zu sein als für kleinere Moleküle.

Zur Erklärung der überraschenden Wirksamkeit des erfindungsgemäßen Verfahrens wurde auch vermutet, daß diese auf der Ausbildung von Strömungskanälen in der Feststoffschüttung beruht. So wurden bei der Piperinextraktion aus gemahlenem Pfeffer gelegentlich groß ausgebildete Kanäle in der Rohstoffschüttung nach der Durchführung der Extraktion in der herkömmlichen Fahrweise,also beim Durchströmen des Extraktors von unten nach oben, festgestellt. Es konnte vermutet werden, daß mit der Strömungsführung des Lösungsmittels gemäß der Erfindung lediglich eine Reduzierung von innerer Kanalbildung im Feststoffbett bewirkt wird und damit das Lösungsmittel besser ausgenutzt wird. Es wurden daher Versuche durchgeführt, bei denen der Feststoff im Extraktor während der Extraktion gerührt wurde. Überraschenderweise wurde auch hierbei ein nahezu identischer Einfluß der Umkehr der Strömungsrichtung des Lösungsmittels im Extraktor festgestellt. So war die Anfangsbeladung von Kohlendioxid mit Piperin mehr als doppelt so hoch (ca. 110%) bei der erfindungsgemäßen Gasführung von oben nach unten als bei konventioneller Gasführung.

Das erfindungsgemäße Verfahren ermöglicht neue Optimierungsmöglichkeiten für die Hochdruckextraktion. So kann in einem speziell ausgebildeten Autoklaven das Lösungsmittel beispielsweise in halber Schütthöhe des Feststoffes zugeführt werden. Nach oben und unten treten dann zwei Teilströme des Lösungsmittels mit unterschiedlich zusammengesetzten Inhaltsstoffen aus dem Extraktor aus. So können auf einfache Weise zwei unterschiedliche Extraktfraktionen gewonnen werden.

Die unterschiedliche Auswirkung der Umkehr der Strömungsrichtung des Lösungsmittels auf die einzelnen Molekülarten ermöglicht es auch, die Extraktion in verschiedenen Teilschritten mit unterschiedlicher Durchflußrichtung des Lösungsmittels durchzuführen.Hierbei können auch für jeden Teilschritt die Extraktionsbedingungen geändert werden. Die unterschiedliche Beladung von einzelnen Lösungsmittelteilströmen kann hierbei noch verstärkt werden, wenn vor oder zwischen den einzelnen Extraktionsschritten der Feststoff mit dem Lösungsmittel für einige Zeit in Kontakt gebracht wird. Als geeignet haben sich Verweilzeiten zwischen 1 Minute und 360 Minuten erwiesen. Während dieser Verweilzeit können sowohl die späteren Extraktionsbedingungen als auch andere Bedingungen im Extraktor eingestellt werden.

Als Beispiele für die Wirksamkeit des erfindungsgemäßen Verfahrens seien die Extraktion von Speckmehl und die Extraktion von Fetten aus entölten Weizenkeimen angegeben.

Die Fettextraktion aus Speckmehl wurde bei $P_E$ = 350 bar, $T_E$ = 60 °C sowie Lösungsmitteldurchsatzraten von 30 kg/h mit $CO_2$ durchgeführt. Ein Entfettungsgrad von 85% wurde bei der konventionellen Strömungsrichtung des Lösungsmittels von unten nach oben nach einem spezifischen Durchsatz von 15 kg $CO_2$ pro kg Speckmehl erreicht, bei umgekehrter Strömungsrichtung dagegen schon nach 9,6 kg $CO_2$/kg Speckmehl. Das bedeutet bei sonst gleichen Bedingungen eine Reduzierung des Zeit-und Energiebedarfes von um ca.30%.

Aus Weizenkeimen,die vorher bei milden Druck-und Temperaturbedingungen mit Hilfe von $CO_2$ entölt worden waren, wurden anschließend Fettfraktionen gewonnen bei Drücken von 350 bar und Temperaturen von 60 °C.

Die bei der neuen Lösungsmittelführung gefundenen Beladungen lagen um bis zu 55% über den Vergleichswerten bei konventioneller Lösungsmittelführung durch den Extraktor.

Die Zeichnungen veranschaulichen Ausführungsbeispiele der Erfindung.

Es zeigen:

Fig.1 das Grundschema des erfindungsgemäßen Verfahrens,

Fig.2 eine Variante mit zwei Lösungsmittelteilströmen,

Fig.3 die Ergebnisse einer Pfefferextraktion bei 90 bar,

Fig.4 die Ergebnisse einer Pfefferextraktion bei 200 bar,

Fig.5 die Ergebnisse einer Pfefferextraktion bei 200 bar, wobei der Feststoff gerührt wurde.

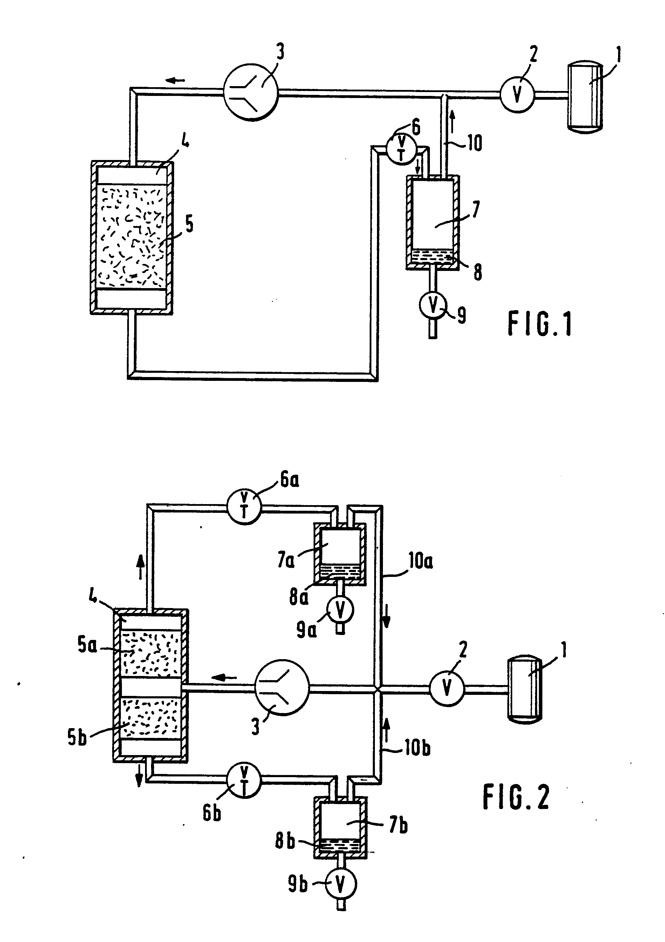

In Fig.1 ist das Grundprinzip des erfindungsgemäßen Verfahrens dargestellt. Aus einem Speicher 1 wird durch das Ventil 2 das als Lösungsmittel vorgesehene Gas entnommen und mittels des Kompressors 3 auf den gewünschten Extraktionsdruck verdichtet. Vielfach handelt es sich hierbei um überkritisches Kohlendioxid. Das verdichtete Lösungsmittel tritt dann in den Extraktor 4 ein und durchströmt erfindungsgemäß von oben nach unten den aufgeschütteten Feststoff 5. Das Lösungsmittel belädt sich hierbei mit organischen Bestandteilen aus dem Feststoff 5. Das beladene Lösungsmittel wird durch das Ventil 6 in den Abscheider 7 entspannt, wobei die gelösten Inhaltsstoffe als Extrakt 8 anfallen. Sie können durch das Ventil 9 aus dem Abscheider 7 abgezogen werden. Das von den gelösten Bestandteilen befreite Lösungsmittel gelangt durch die Leitung 10 zurück zum Kompressor 3 und wird dort erneut auf den Extraktionsdruck verdichtet.

Lösungsmittelverluste werden aus dem Speicher 1 ergänzt.

Fig.2 zeigt eine Variante des Verfahrens von Fig.1, bei welcher das komprimierte Lösungsmittel in zwei Teilströme aufgeteilt wird. Der Extraktor 4 ist hierbei so ausgebildet, daß in ihm quasi zwei separate Schüttungen des Feststoffes, nämlich 5a und 5b, ausgebildet werden. Der Feststoff 5a wird in konventioneller Weise von dem einen Teilstrom des Lösungsmittels von unten nach oben durchströmt, der Feststoff 5b dagegen erfindungsgemäß von dem anderen Teilstrom von oben nach unten. Hierbei ergeben sich unterschiedliche Extrakte 8a und 8b, die in separaten Abscheidern 7a, 8a durch separate Ventile 6a, 7a von ihren zugehörigen Lösungsmittelteilströmen abgetrennt werden. Durch die Ventile 9a, 9b können die unterschiedlichen Extrakte 8a, 8b abgezogen werden. Die von den Inhaltsstoffen befreiten Lösungsmittelteilströme gelangen durch die Leitungen 10a, 10b zurück zum Kompressor 3.

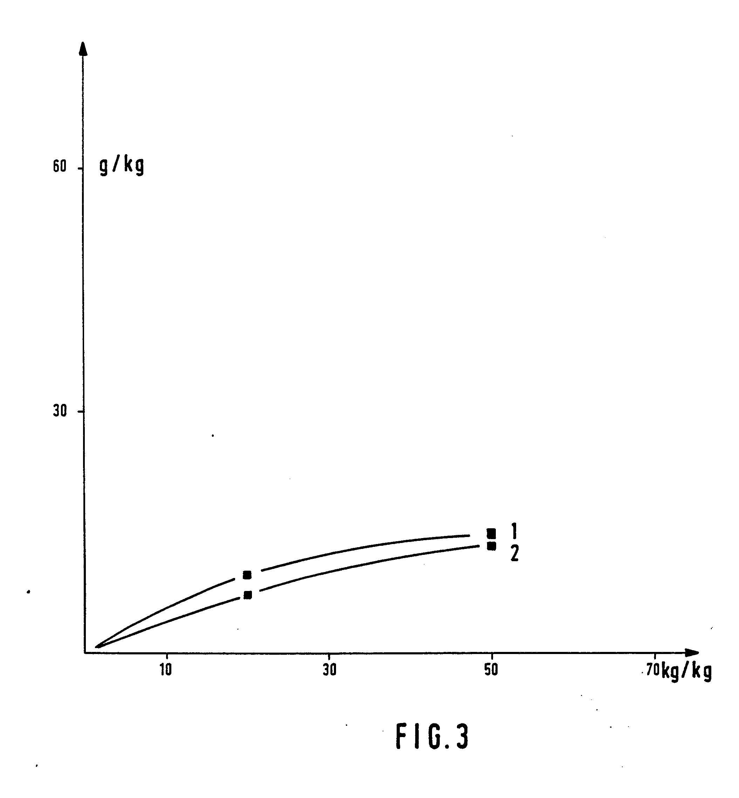

Die Figuren 3 bis 5 zeigen anhand von Pfefferextraktionskurven bei verschiedenen Bedingungen die Wirksamkeit der erfindungsgemäßen Lösungsmittelführung von oben nach unten gegenüber der konventionellen von unten nach oben. Es ist jeweils die spezifische Extraktmenge (g/kg) über dem spezifischen $CO_2$-Durchsatz (kg/kg) aufgetragen. Die Kurve 1 zeigt jeweils Ergebnisse des erfindungsgemäßen Verfahrens, im Vergleich dazu Kurve 2 Ergebnisse des herkömmlichen Verfahrens.

Fig.3 zeigt Ergebnisse der Aromaölextraktion bei den Extraktionsbedingungen:

$P_E$ : 90 bar
$T_E$ : 45 °C
$CO_2$-Durchsatzrate: 24 kg/h

Nach einem spezifischen $CO_2$-Durchsatz von 20 kg/kg Pfeffer wurden konventionell 7 g wasserfreies Aromaöl pro kg Rohstoff, bei der erfindungsgemäßen Gasführung 10 g/kg produziert. Mit steigendem spezifischen Durchsatz werden die Unterschiede kleiner, da der Rohstoff mit der erfindungsgemäßen Gasführung schneller ausgelaugt wird, bei 50 kg/kg Durchsatz wurden konventionell 13,5 g/kg anstatt 15 g/kg Aromaöl extrahiert.

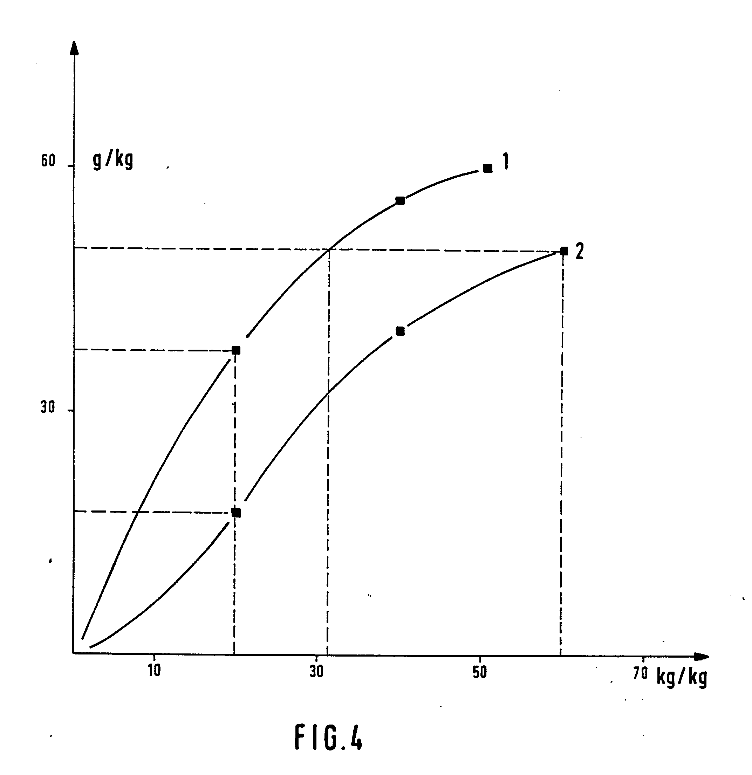

Fig.4 zeigt entsprechende Extraktionskurven für die Piperin-Fraktion.

Extraktionsbedingungen:

$P_E$ : 200 bar
$T_E$ : 45 °C
$CO_2$-Durchsatzrate: 24 kg/h

Die mittlere Beladung zu Beginn des Versuches liegt bei 27,5 g/20 kg (Piperin/$CO_2$) bzw. bei 17,5 g/20 kg je nach Strömungsrichtung des Lösungsmittels. 50 g Piperin/kg Pfeffer werden bei erfindungsgemäßer Gasführung von oben nach unten daher bereits nach einem spezifischen Durchsatz von 33 kg $CO_2$ pro kg Pfeffer gewonnen, während bei konventioneller Gasführung dazu ein Durchsatz von 60 kg $CO_2$ pro kg Rohstoff erforderlich ist.

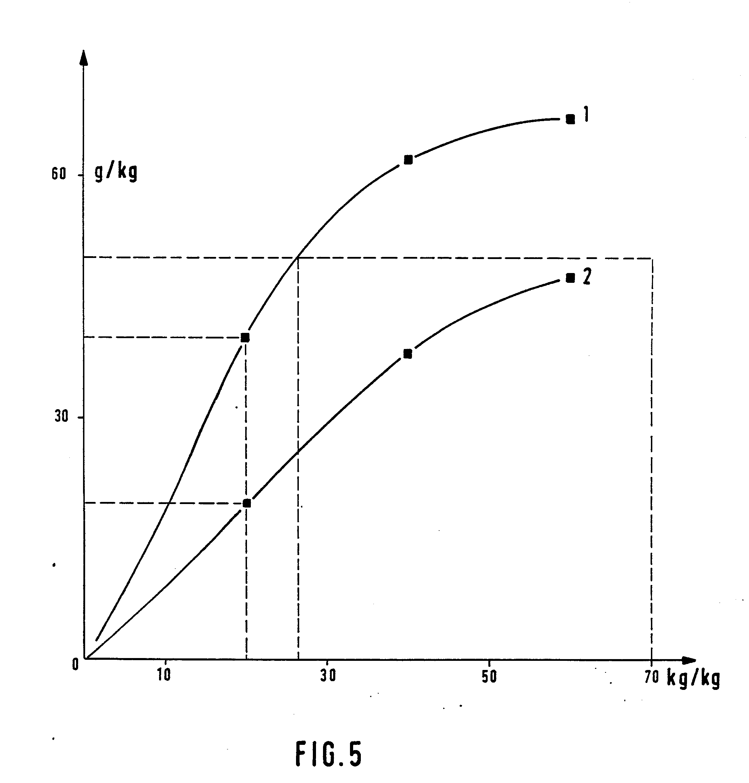

Fig.5 zeigt unter sonst gleichbleibenden Bedingungen wie bei Fig.4 die Ergebnisse einer Extraktion in einem Rührautoklaven. Sie unterscheiden sich nicht nennenswert von den Extraktionskurven von Fig.4. Die Anfangsbeladung des Lösungsmittels ist bei der erfindungsgemäßen Gasführung ca. 100% besser als bei konventioneller und 50 g Extrakt pro kg Rohstoff werden schon nach einem spezifischen Lösungsmitteldurchsatz von 27 kg/kg gegenüber 70 kg/kg erreicht.

## Ansprüche

1. Verfahren zur Extraktion organischer Bestandteile aus Feststoffen, bei dem ein gasförmiges Lösungsmittel unter hohem Druck einen mit dem Feststoff gefüllten Extraktor (4) in vertikaler Richtung durchströmt und organische Bestandteile aufnimmt, die in einem nachfolgenden Abscheider (7) abgetrennt werden, dadurch gekennzeichnet, daß das Lösungsmittel den Extraktor zumindest teilweise von oben nach unten durchströmt.

2. Verfahren nach Anspruch 1, dadurch gekennzeichnet, daß das Lösungsmittel in mindestens zwei aufeinanderfolgenden Extraktionsschritten den Extraktor zunächst von unten nach oben und dann von oben nach unten durchströmt.

3. Verfahren nach Anspruch 2, dadurch gekennzeichnet, daß jeder Extraktionsschritt bei unterschiedlichen Extraktionsbedingungen durchgeführt wird.

4. Verfahren nach Anspruch 1, dadurch gekennzeichnet, daß das Lösungsmittel in mittlerer Höhe in den Extraktor eingeleitet wird und in je einem Teilstrom die zugehörige Feststoffschüttung (5a, 5b) von unten nach oben beziehungsweise von oben nach unten durchströmt.

5. Verfahren nach einen dem Ansprüche 1 bis 4, dadurch gekennzeichnet, daß das Lösungsmittel mit dem Feststoff im Extraktor ohne Durchfluß während einer Verweilzeit zwischen 1 Minute und 360 Minuten in Kontakt gehalten wird, bevor die Extraktion oder der Extraktionsschritt beginnt.

6. Verfahren nach Anspruch 5,
dadurch gekennzeichnet,
daß das Lösungsmittel während der Verweilzeit unter Extraktionsbedingungen mit dem Feststoff in Kontakt gehalten wird.

FIG.1

FIG.2

EM 1275

FIG.3

FIG.4

MESSER GRIESHEIM GMBH    0 280 935    MG 1596

FIG.5

EM 1275